# EUROPÄISCHE PATENTSCHRIFT

(11) **EP 2 282 934 B1**
(45) Veröffentlichungstag und Bekanntmachung des Hinweises auf die Patenterteilung: **25.04.2018**
(21) Anmeldenummer: 09741888.3
(22) Anmeldetag: 07.05.2009
(51) Int. Cl.: B64D 11/06

(54) **BAUSATZ FÜR SITZREIHEN IN FLUGZEUGEN**
KIT FOR SEAT ROWS IN AIRCRAFT
ENSEMBLE D'ÉLÉMENTS POUR RANGÉES DE SIÈGES DANS DES AÉRONEFS

(30) Priorität: 07.05.2008 DE 102008022671; 22.08.2008 DE 102008039262
(43) Veröffentlichungstag der Anmeldung: 16.02.2011
(73) Patentinhaber: ZIM GmbH, 88677 Markdorf (DE)
(72) Erfinder: ZIMMERMANN, Peter, 88677 Markdorf (DE); SOETEBIER, Ulf, 88046 Friedrichshafen (DE); ISELE, Frank, 88263 Horgenzell (DE); GRÜNBERG, Jürgen, 88214 Ravensburg (DE)
(74) Vertreter: Otten, Roth, Dobler & Partner mbB Patentanwälte
(86) Internationale Anmeldenummer: PCT/EP2009/003262
(87) Internationale Veröffentlichungsnummer: WO 2009/135669

(56) Entgegenhaltungen:
- EP-A2- 1 348 625
- DE-A1- 3 918 500
- DE-C1- 4 337 938
- DE-U1- 7 628 789
- DE-U1-202008 006 304
- US-A1- 2003 094 842

## Beschreibung

Die Erfindung betrifft Sitzreihen, insbesondere in Flugzeugen, deren einzelne Sitze in ihrer nutzbaren Sitzbreite verstellbar sind und Sitzteiler sowie Stützbeine aufweisen, die durch quer zur Sitzrichtung verlaufende Holme gehalten sind.

### Stand der Technik

Aus der DE 39 18 500 C2 ist es bekannt, den Sitzteiler oder auch den Sitzfuss an einem Tragrohr zu befestigen. Der Sitzfuss wird mittels eines Spannbandes am Tragrohr und der Sitzteiler im vorderen Bereich mittels eines Profilrohres und Verschraubungen befestigt.

Aus dem deutschen Gebrauchsmuster DE 76 28 789 ist beispielsweise eine so genannte Fluggastsitzreihe mit Einzelrückenlehnen und seitlich durch Sitzteiler begrenzte Seitenteile bekannt, die von einem gemeinsamen Sitzgestell getragen werden, das wenigstens zwei parallel zueinander und in Sitzquerrichtung verlaufende, als Rohre ausgebildete Holme aufweist, mit denen Füsse fest und zumindest ein Teil der Sitzteiler in Holmlängsrichtung verstellbar verbunden sind.

EP 1 348 625 A2 offenbart eine Sitzreihe für Flugzeuge, wobei ein Sitzteiler durch Lösen einer Klemmverbindung in Richtung der Holme der Sitzreihe verstellbar ist.

Allgemein erfolgt eine Anpassung an die jeweilige Flugzeugrumpfkonfiguration, in dem die Sitzteiler und die Sitzbeine entlang der Holme verschieblich sind und mit diesen entweder über das Prinzip der Hebelnabe oder durch einen direkten Formschluss verbunden werden. Bei dieser Art der Verbindung besteht der Nachteil, dass bei Interferenzen von Sitzbein zu Sitzteiler spezielle Teile oder Verbindungsanpassungen notwendig sind.

### Aufgabe der Erfindung

Hier setzt die Erfindung ein, der die Aufgabe zugrunde liegt, derartige bekannte Fluggastsitzreihen in der Weise weiterzubilden bzw. zu verbessern, dass eine Breitenanpassung der einzelnen Sitze mit einer möglichst geringen Teilevielfalt erreichbar ist und auch mögliche Interferenzen von Sitzbein zu Sitzteiler ohne Zusatzteile bei dennoch ausreichender Stabilität realisierbar ist.

### Lösung der Aufgabe

Diese Aufgabe wird erfindungsgemäss in einfacher Weise durch die Merkmale der unabhängigen Ansprüche gelöst.

Die Verbindung zwischen Sitzteiler und Holm wird durch Anwendung des Scheibennabenprinzips gelöst. An Stellen, wo Sitzteiler und Sitzbeine interferieren, werden diese Teile direkt nach dem Prinzip der Scheibennabe verbunden. An allen anderen Stellen werden Klemmteile verwendet um das Prinzip der Scheibennabe zu realisieren.

Diese Art der Verbindung erfordert bei Interverenzen ein relativ kleines Raster welches vorteilhaft durch das jeweilige Polster der Sitze leicht aufgefangen werden kann, sodass dem normalen Betrachter z.B. eine Einengung der nutzbaren Sitzbreite nicht unmittelbar ins Auge fällt. Besteht keine Interferenz, ist eine stufenlose Anpassung möglich.

Nach Massgabe der vorliegenden Erfindung hat es sich in der Praxis bewährt, wenn die Sitzteiler mit den Stützbeinen nach dem Prinzip der Scheibennabe an den Holmen befestigt wird, wobei dann diese Art der Scheibennabenverbindungen durch korrespondierende Scheibennabenhälften gebildet werden können.

Hierbei ist es zweckmässig, wenn die Scheibennabenhälften einerseits an den Sitzteilern und andererseits an den Stützbeinen vorgesehen sind und die Breite der Scheibennabenhälften der Stützbeine ein Mehrfaches der Breite der Scheibennabenhälften der Sitzteiler beträgt.

In diesem Zusammenhang zeigte sich, dass als geeignetes Mass für die Breite der Scheibennabenhälften der Stützbeine das Dreifache der Breite der Scheibennabenhälften der Sitzteiler ausreicht, um eine ausreichende Breitenanpassung zu erhalten.

Die Scheibennabenhälften können bevorzugt mittels Schrauben miteinander verbunden werden, welche nach dem erfindungsgemässen Baukastenprinzip auch gut zugänglich angeordnet sind.

Durch den Umstand, dass die einzelnen Scheibennabenhälften mit unterschiedlichen Breiten ausgebildet werden, kann es aus Stabilitätsgründen zweckmässig sein, wenn die Breitendifferenz zwischen den Scheibennabenhälften der Sitzteiler und der Stützbeine durch einzelne separate Scheibennabenhälften ausgeglichen wird. Hierbei ist es zweckmässig, wenn die einzelnen Scheibennabenhälften die gleiche Breite wie die an den Sitzteilern angebrachten Scheibennabenhälften aufweisen. Damit wird ein gleichmässiges Rastermass erhalten.

Die Befestigung der einzelnen separaten Scheibennabenhälften an den Scheibennabenhälften der Stützbeine kann ebenfalls durch Schrauben erfolgen, die denen für die Verbindung der Sitzteiler mit den Stützbeinen entsprechen.

Von der Erfindung umfasst wird auch eine entsprechende Sitzreihe und die Verwendung eines entsprechenden Bausatzes zur Herstellung dieser Sitzreihe. Ferner werden auch die einzelnen Sitzteiler und Sitzbeine jeweils mit einer Scheibennabenhälfte in die Erfindung mit einbezogen.

Zu beachten sind vor allem auch vorgeschriebene Crash-Tests.

Die in den Zulassungsvorschriften geforderte Vorverformung des Fussbodens, hier Pitch & Roll genannt, bringt eine sehr grosse Vorspannung in die Primärstruktur des Sitzes, insbesondere in Tragrohre, Sitzteiler und Sitzbeine. Bei der Vorgabe Pitch & Roll wird einerseits die eine Sitzschiene um einen vorgegebenen Wert nach unten verlagert sowie die andere Sitzschiene noch zusätzlich um einen bestimmten Winkel verdreht. Diese Vorspannung wird der eigentlichen Beanspruchung aus einem 16g Crashlastfall überlagert. Eine Reduzierung der Vorspannung führt zu einer sichereren Nachweisführung bzw. lässt eine leichtere Bauweise der Primärstruktur zu.

Bei den bekannten Lösungen erfolgt die Verbindung der Sitzbeine an die Tragrohre formschlüssig oder durch eine breite schellenartige Verklemmung oder durch Verbindungselemente, wie Schrauben, Nieten oder Bolzen. Dadurch ist eine Nachgiebigkeit durch verformungsbedingtes Durchrutschen kaum oder gar nicht gegeben. Ein Abbau der verformungsbedingten Vorspannung ist dadurch nicht oder nur in engen Grenzen möglich.

Gemäss der vorliegenden Erfindung werden die Tragrohre über Halbschalen mit den Sitzbeinen verbunden. Dabei sind durch die Halbschalenbauweise definierte Reibwerte einstellbar, um ein Durchrutschen des Tragrohres bei Pitch & Roll in zumindest geringem Umfang zu ermöglichen. Darüber hinaus ist jede der vorhandenen Halbschalen individuell verschraubt und daher individuell verformbar und für sich nachgiebig, so dass durch eine beanspruchungsgerechte Nachgiebigkeit der Einzelhalbschalen ein optimales Durchrutschen der Tragrohre und damit eine Entlastung der Sitzstruktur gewährleistet wird.

Vorteilhafterweise sollten die Durchgangslöcher jeweils in den Halbschalen sein und das zugehörige Gewinde im Sitzfuss/Sitzteiler. Durch den Aufbau der mehrfachen Halbschalen ist es möglich, dass die Halbschalen eine Relativbewegung zueinander durchführen können. Somit ist einerseits eine sehr stabile Verbindung geschaffen, die aber gleichzeitig eine in Grenzen definierte Nachgiebigkeit und Relativbewegung zulässt. Durch die Vorspannung mittels vorgegebenen Schraubenanzugsmoment erfolgt eine kraft- und reibschlüssige Verbindung, die aber bei Pitch & Roll auch eine gewisse Nachgiebigkeit ermöglicht, noch bevor es zu einem Versagen der Strukturbauteile kommen könnte und sogar in Grenzen eine gewisse Rückstellmöglichkeit besitzt, um zwar eine Verformung zu haben, aber ebenfalls keinen Bruch der Bauteile.

Die modulare Bauweise gemäss der vorliegenden Erfindung ermöglicht gerade dieses. Es müssen keine vielfältigen Offset-Lösungen bereitgestellt werden, sondern es sind dabei alle gängigen Sitzkonfigurationen einstellbar und auch einfach herstellbar sowie montierbar.

### Figurenbeschreibung

Weitere Merkmale und Vorteile der vorliegenden Erfindung ergeben sich aus der nachfolgenden Beschreibung eines Ausführungsbeispiels in Verbindung mit der Zeichnung; darin zeigen:
Figur 1 eine vereinfachte perspektivische Darstellung einer Fluggastsitzreihe mit drei Sitzen, welche unterschiedliche Fertigstellungsgrade aufweisen;
Figur 2 eine vereinfachte perspektivische Darstellung eines zusammen geschraubten Bauteils aus einem Sitzteiler mit zwei Stützbeinen in einem vergrösserten Massstab;
Figur 3 eine Seitenansicht des Bauteils nach Fig. 2 als Explosionsdarstellung;
Figuren 4a) - 4d) vier vereinfachte perspektivische Darstellungen des Verbindungsbereichs vorderes Stützbein/Sitzteiler des Bauteils nach Fig. 2 in vier unterschiedlichen Positionen zur Veränderung einer Sitzbreite.

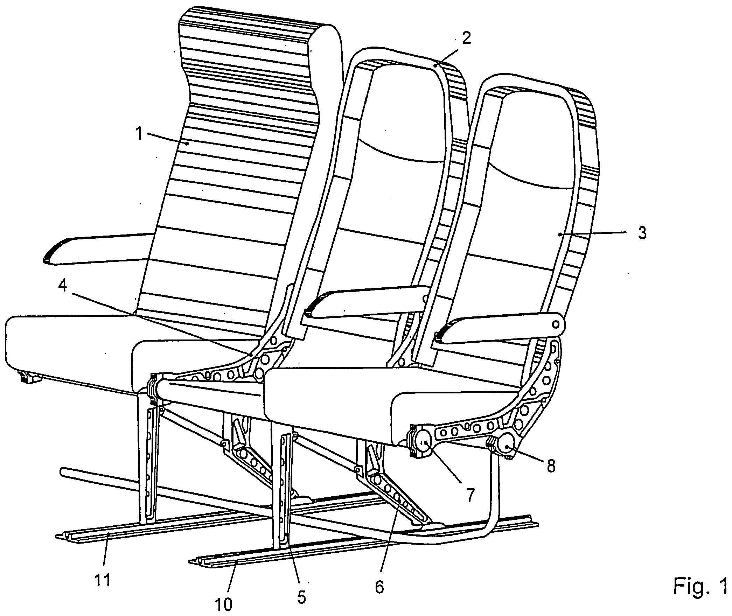

Die in Fig. 1 beispielhaft dargestellte Sitzreihe mit drei Sitzen, insbesondere zum Einbau in Flugzeuge, zeigt einen komplett mit einer Polsterung ausgestatteten Sitz 1, rechts daneben einen Sitz 2, dem die Polsterung noch fehlt und einen Sitz 3, bei dem lediglich ein Sitzpolster aufliegt.

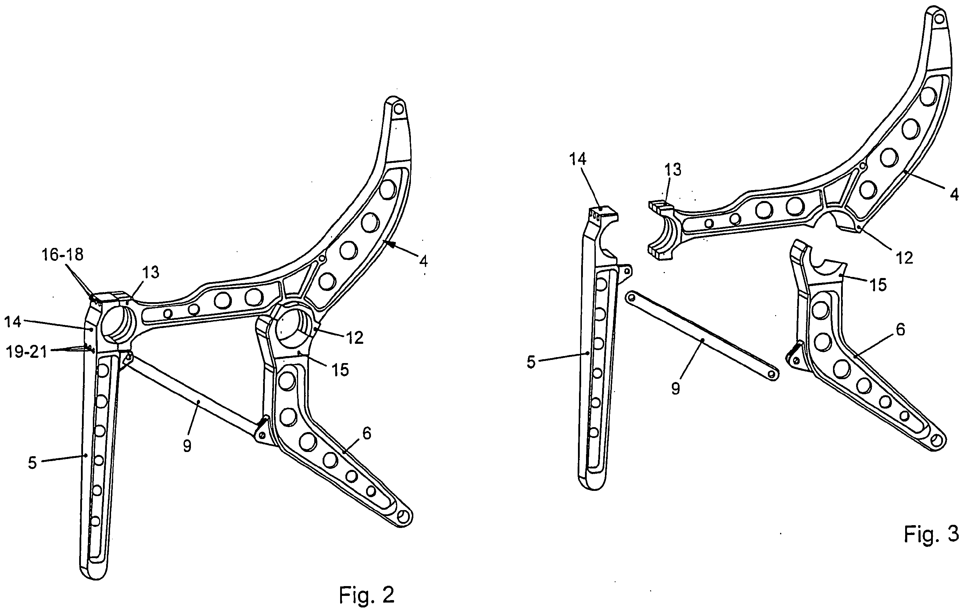

Zwischen den Sitzen 1 - 3 befinden sich gleiche Sitzteiler 4, die mit gleichen Stützbeinen 5 und 6 nach dem Prinzip einer Scheibennabenverbindung mit rohrartigen, quer zur Sitzrichtung und parallel zueinander verlaufenden Holmen 7 und 8 miteinander verbunden sind. Ferner sind die Stützbeine 5 und 6 durch eine Strebe 9 (siehe Fig. 2) gegeneinander abgestützt.

Die beidseitigen Stützbeine 5 und 6 des mittleren Sitzes 2, die in Bodenschienen 10 und 11 geführt sind, tragen im Wesentlichen die gesamte Sitzreihe aus den Sitzen 1 - 3.

In Fig. 2 ist das tragende Bauteil aus Sitzteiler 4, den Stützbeinen 5 und 6 sowie der Strebe 9 zusammengeschraubt dargestellt, während in Fig. 3 die einzelnen Teile des tragenden Bauteils in einem unverschraubten Zustand explosionsartig dargestellt sind. Wesentlich ist hierbei, dass jeder Sitzteiler 4 zwei Anschlussbereiche in der Form von Scheibennabenhälften 12 und 13 besitzt, die mit korrespondierenden Scheibennabenhälften zum einen am oberen Ende des vorderen Stützbeins 5 - bezeichnet mit 14 - und zum anderen am oberen Ende des hinteren abgewinkelten Stützbeins 6 - bezeichnet mit 15 - zusammengeschraubt werden können und gemäss Fig. 2 auch zusammengeschraubt sind.

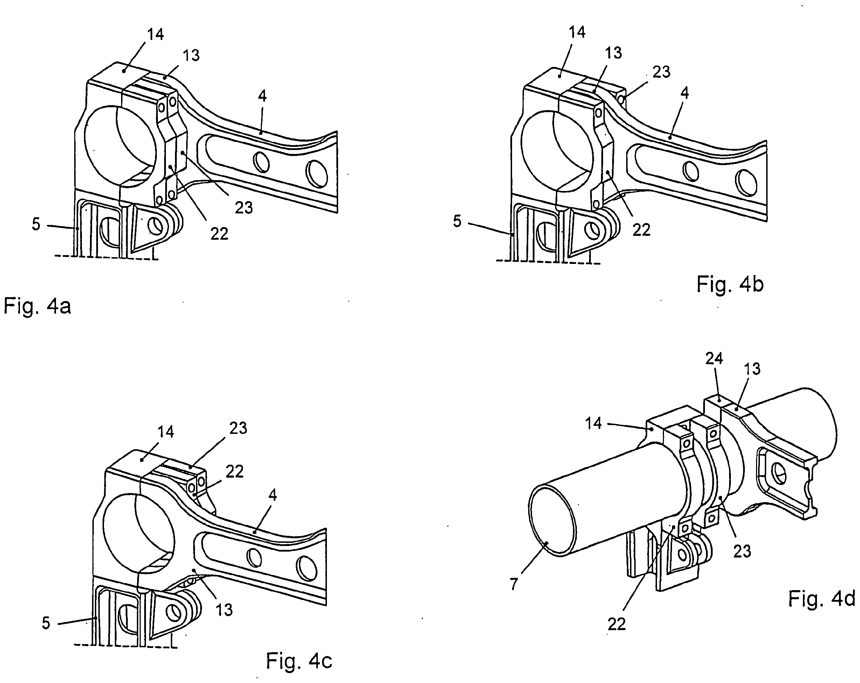

In Fig. 2 ist eine Scheibennabenverbindung, bestehend aus den Scheibennabenhälften 13 und 14, gemäss der Abbildung Fig. 4c), veranschaulicht. Hier ist deutlich zu sehen, dass dafür jeweils drei obere und drei untere Schrauben 16 - 18 bzw. 19 - 21 verwendet sind. Dies deshalb, da bei diesem Ausführungsbeispiel die Breite der Scheibennabenhälfte 14 des Stützbeins 5 das Dreifache der Breite der Scheibennabenhälfte 13 des Sitzteilers 4 beträgt und die Breitendifferenz zwischen den jeweiligen Scheibennabenhälften 13 und 14 durch zwei einzelne separate Scheibennabenhälften 22 und 23 ausgeglichen wurde, deren jeweilige Breite der Breite der Scheibennabenhälften 13 entspricht.

Durch diese Breitenabstufung der Scheibennabenhälfte 13, 14, 22 und 23 wird vorteilhaft ein relativ feines Raster zum Verstellen der nutzbaren Sitzbreite erhalten. Gleichzeitig erhöhen die einzelnen separaten Scheibennabenhälften 22 und 23 die Stabilität der jeweiligen Scheibennabenverbindung, indem das Stützbein immer senkrecht steht.

Anhand der Figuren 4a) - 4d) wird nachfolgend erläutert, wie z. B. die nutzbaren Sitzbreiten der Sitze 1 - 3 der in Fig. 1 dargestellten Sitzreihe auf einfache Weise verstellt werden können, wobei die in den Figuren 4a) - 4d) dargestellten Scheibennabenverbindungen jeweils die Verbindung 13/14 im vorderen Sitzbereich betreffen, wogegen die Scheibennabenverbindung 12/15 im hinteren Sitzbereich analog gehandhabt bzw. parallel oder unmittelbar nach der Verbindung 13/14 entsprechend umgestellt wird:
In Fig. 4a) ist der Sitzteiler 4 mit seiner gegenüber der Scheibennabe 14 schmaleren Scheibennabe 13 rechtsbündig mit der Scheibennabe 14 verschraubt und die Breitendifferenz ist mit den einzelnen separaten Scheibennabenhälften 22 und 23 ausgeglichen, die ebenfalls mit der Scheibennabenhälfte 14 verschraubt sind, wobei der Holm 7, um die sich die Verbindung klemmt, zeichnerisch weggelassen wurde.

Soll nun die nutzbare Sitzbreite vergrössert bzw. verändert werden, dann kommt z.B. die Anordnung gemäss Fig. 4b) zum Tragen, wo der Sitzteiler 4 in der Mitte der Scheibennabenhälfte 14 gesetzt worden ist und gleichzeitig die beiden einzelnen Scheibennabenhälften 22 und 23 zu beiden Seiten des Sitzteiles 4.

Eine weitere Breitenveränderung zeigt das Beispiel in Fig. 4c), bei dem die Scheibennabenhälfte 13 des Sitzteilers 4 linksbündig zur Scheibennabenhälfte 14 gerückt worden ist und gleichzeitig die rechte Breitendifferenz durch die beiden nebeneinander angeordneten separaten Scheibennabenhälften 22 und 23 ausgefüllt worden ist.

Eine weitere Breitenveränderung zeigt das Beispiel in Fig. 4d), bei dem keine Interferenz zwischen der Scheibennabenhälfte 13 des Sitzteilers und der Scheibennabenhälfte 14 des Stützbeines besteht. In diesem Fall werden die Scheibennabenhälften geschlossen durch die Scheibennabenhälften 22, 23 und die Scheibennabenhälfte 13 über eine weitere separate Scheibennabenhälfte 24 mit dem Holm 7 verbunden.

Insgesamt bietet daher der erfindungsgemässe Bausatz eine Vielzahl von baulichen Variationsmöglichkeiten bei insbesondere Fluggastsitzreihen an, da dieser zum einen nur eine relativ geringe Anzahl an Bauteilen umfasst und zum anderen diese Bauteile relativ einfach gehandhabt werden können, wobei gleichzeitig die Forderung nach Stabilität gewährleitstet ist.

**Bezugszeichenliste**

| | | | | | |
|---|---|---|---|---|---|
| 1 | Sitz | 34 | | 67 | |
| 2 | Sitz | 35 | | 68 | |
| 3 | Sitz | 36 | | 69 | |
| 4 | Sitzteiler | 37 | | 70 | |
| 5 | Stützbein | 38 | | 71 | |
| 6 | Stützbein | 39 | | 72 | |
| 7 | Stützschiene | 40 | | 73 | |
| 8 | Stützschiene | 41 | | 74 | |
| 9 | Strebe | 42 | | 75 | |
| 10 | Bodenschiene | 43 | | 76 | |
| 11 | Bodenschiene | 44 | | 77 | |
| 12 | Scheibennabenhälfte | 45 | | 78 | |
| 13 | Scheibennabenhälfte | 46 | | 79 | |
| 14 | Scheibennabenhälfte | 47 | | | |
| 15 | Scheibennabenhälfte | 48 | | | |
| 16 | Schrauben | 49 | | | |
| 17 | Schrauben | 50 | | | |
| 18 | Schrauben | 51 | | | |
| 19 | Schrauben | 52 | | | |
| 20 | Schrauben | 53 | | | |
| 21 | Schrauben | 54 | | | |
| 22 | Scheibennabenhälfte | 55 | | | |
| 23 | Scheibennabenhälfte | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sitzreihen, insbesondere in Flugzeugen, deren einzelne Sitze (1 - 3) in ihrer nutzbaren Sitzbreite verstellbar sind und Sitzteiler (4) mit Stützbeinen (5; 6) aufweisen, die durch quer zur Sitzrichtung verlaufende Holme (7; 8) gehalten sind, wobei zumindest ein Sitzteiler (4) in
Richtung der Holme (7; 8) verstellbar ist, **dadurch gekennzeichnet, dass** der Sitzteiler (4) mit dem Stützbein (5; 6) nach dem Prinzip einer Scheibennabenverbindung an zumindest einem Holm (7; 8) befestigbar ist.

2. Sitzreihe nach Anspruch 1, **dadurch gekennzeichnet, dass** die Art Scheibennabenverbindung durch korrespondierende Scheibennabenhälften (12 - 15) gebildet ist.

3. Sitzreihe nach Anspruch 2, **dadurch gekennzeichnet, dass** jeweils eine Scheibennabenhälfte (12; 13) an dem Sitzteiler (4) und eine Scheibennabenhälfte (14; 15) an dem Stützbein (5; 6) vorgesehen sind.

4. Sitzreihe nach Anspruch 3, **dadurch gekennzeichnet, dass** die Breite der Scheibennabenhälfte (14; 15) des Stützbeins (5; 6) ein Mehrfaches der Breite der Scheibennabenhälfte (12; 13) des Sitzteilers (4) beträgt.

5. Sitzreihe nach Anspruch 4, **dadurch gekennzeichnet, dass** die Breite der Scheibennabenhälfte (14; 15) des Stützbeins (5; 6) das Mehrfache der Breite der Scheibennabenhälfte (12; 13) des Sitzteilers (4) beträgt.

6. Sitzreihe nach wenigstens einem der Ansprüche 3 oder 5, **dadurch gekennzeichnet, dass** zwischen die Scheibennabenhälfte (14; 15) des Stützbeins (5; 6) und/oder die Scheibennabenhälfte (12; 13) des Sitzteilers (4) zumindest eine weitere Scheibennabenhälfte (22; 23) einsetzbar ist.

7. Sitzreihe nach wenigstens einem der Ansprüche 3 - 6, **dadurch gekennzeichnet, dass** die Breitendifferenz zwischen den Scheibennabenhälfte (12; 13) der Sitzteiler (4) und den Scheibennabenhälften (14; 15) der Stützbeine (5; 6) durch einzelne separate Scheibennabenhälften (22; 23) ausgleichbar ist.

8. Sitzreihe nach Anspruch 7, **dadurch gekennzeichnet, dass** die einzelnen separaten Scheibennabenhälften (22; 23; 24) die gleiche Breite wie die an den Sitzteilern (4) angebrachten Scheibennaben (12; 13) aufweisen.

9. Sitzreihe nach wenigstens einem der Ansprüche 3 bis 8, **dadurch gekennzeichnet, dass** die Scheibennabenhälften (12; 15 und 13; 14 und 22; 23; 24) mittels geeigneten Verbindungselemente (16 - 21) miteinander verbindbar sind.

10. Sitzreihe nach Anspruch 9, **dadurch gekennzeichnet, dass** die einzelnen separaten Scheibennabenhälften (22; 23; 24) einzeln mittels geeigneten Verbindungselemente an den Scheibennabenhälften (13; 14; 15) der Stützbeine (5; 6) bzw. des Sitzteilers (4) befestigbar sind.

11. Sitzreihe nach wenigstens einem der Ansprüche 1 bis 10, **dadurch gekennzeichnet, dass** die Scheibennabenhälften (12; 15 und 13; 14 und 22; 23; 24) so miteinander verbunden werden, dass sie im Crash-Fall zumindest geringfügig sich relativ auf dem Holm (7; 8) bewegen bzw. nachgeben.

12. Sitzreihe nach wenigstens einem der Ansprüche 1 - 11, **dadurch gekennzeichnet, dass** Sitzteiler (4), Stützbein (5; 6) und/oder Scheibennabenhälften (12; 15 und 13; 14 und 22; 23; 24) aus gleichen Bauteilen bestehen.

13. Sitzteiler für einzelne Sitze (1 - 3), insbesondere in Flugzeugen, die in ihrer nutzbaren Sitzbreite verstellbar und an quer zur Sitzrichtung verlaufenden Holmen (7; 8) gehalten sind, **dadurch gekennzeichnet, dass** der Sitzteiler (4) nach dem Prinzip einer Scheibennabenverbindung an zumindest einem Holm (7; 8) befestigbar ist und dass die Art Scheibennabenverbindung durch korrespondierende Scheibennabenhälften (12; 13) gebildet und eine dem Sitzteiler zugeordnet ist.

14. Stützbein für einzelne Sitze (1 - 3), insbesondere in Flugzeugen, die in ihrer nutzbaren Sitzbreite verstellbar und an quer zur Sitzrichtung verlaufenden Holmen (7; 8) gehalten sind, **dadurch gekennzeichnet, dass** das Stützbein (5; 6) nach dem Prinzip einer Scheibennabenverbindung an zumindest einem Holm (7; 8) befestigbar ist und dass die Art Scheibennabenverbindung durch korrespondierende Scheibennabenhälften (14; 15) gebildet und eine dem Stützbein (5; 6) zugeordnet ist.

## Claims

1. Seat row, in particular in aircraft, the individual seats (1 - 3) of which are adjustable in their usable seat width and comprise seat dividers (4) with support legs (5; 6) that are held by struts (7; 8) running transversely to the seat direction, wherein at least one seat divider (4) is adjustable in the direction of the struts (7; 8), **characterised in that** the seat divider (4) can be secured to the support leg (5; 6) according to the principle of a disk hub connection on at least one strut (7; 8).

2. Seat row according to claim 1, **characterised in that** the disk hub connection is formed by corresponding disk hub halves (12 - 15).

3. Seat row according to claim 2, **characterised in that** one disk hub half (12; 13) is provided on the seat divider (4) and one disk hub half (14; 15) is provided on the support leg (5; 6).

4. Seat row according to claim 3, **characterised in that** the width of the disk hub half (14; 15) of the support leg (5; 6) is a multiple of the width of the disk hub half (12; 13) of the seat divider (4).

5. Seat row according to claim 4, **characterised in that** the width of the disk hub half (14; 15) of the support leg (5; 6) is the multiple of the width of the disk hub half (12; 13) of the seat divider (4).

6. Seat row according to at least one of claims 3 or 5, **characterised in that** at least one further disk hub half (22; 23) can be inserted between the disk hub half (14; 15) of the support leg (5; 6) and/or the disk hub half (12; 13) of the seat divider (4).

7. Seat row according to at least one of claims 3 - 6, **characterised in that** the difference in width between the disk hub half (12; 13) of the seat divider (4) and the disk hub halves (14; 15) of the support legs (5; 6) can be compensated for by individual, separate disk hub halves (22; 23).

8. Seat row according to claim 7, **characterised in that** the individual, separate disk hub halves (22; 23; 24) have the same width as the disk hubs (12; 13) attached to the seat dividers (4).

9. Seat row according to at least one of claims 3 to 8, **characterised in that** the disk hub halves (12; 15 and 13; 14 and 22; 23; 24) can be connected together by means of suitable connecting elements (16 - 21).

10. Seat row according to claim 9, **characterised in that** the individual, separate disk hub halves (22; 23; 24) can be secured individually by means of suitable connecting elements to the disk hub halves (13; 14; 15) of the support legs (5; 6) and/or of the seat divider (4).

11. Seat row according to at least one of claims 1 to 10, **characterised in that** the disk hub halves (12; 15 and 13; 14 and 22; 23; 24) are joined together so that they move and yield in the event of a crash at least to some extent relative to the strut (7; 8).

12. Seat row according to at least one of claims 1 to 11, **characterised in that** the seat divider (4), support leg (5; 6) and/or disk hub halves (12; 15 and 13; 14 and 22; 23; 24) consist of the same components.

13. Seat divider for individual seats (1 - 3), in particular in aircraft, which seats are adjustable in their usable seat width and are held on struts (7; 8) running transversely to the seat direction, **characterised in that** the seat divider (4) is can be secured to at least one strut (7; 8) according to the principle of a disk hub connection, and **in that** the disk hub connection is formed by corresponding disk hub halves (12; 13) and one disk hub half is associated with the seat divider.

14. Support leg for individual seats (1 - 3), in particular in aircraft, which are adjustable in their usable seat width and are held on struts (7; 8) running transversely to the seat direction, **characterised in that** the support leg (5; 6) can be secured according to the principle of a disk hub connection to at least one strut (7; 8) and the disk hub connection is formed by corresponding disk hub halves (14; 15) and one disk hub half is associated with the support leg (5; 6).

## Revendications

1. Rangées de sièges, notamment dans des avions, dont les sièges individuels (1-3) ont leur largeur d'assise utile réglable et présentent des séparateurs de siège (4) avec des pieds d'appui (5 ; 6) qui sont maintenus par des longerons (7 ; 8) s'étendant perpendiculairement à la direction d'assise, au moins un séparateur de siège (4) étant réglable dans la direction des longerons (7 ; 8), **caractérisées en ce que** le séparateur de siège (4) avec le pied d'appui (5 ; 6) peut être fixé à au moins un longeron (7 ; 8) selon le principe d'une liaison par moyeu de disque.

2. Rangée de sièges selon la revendication 1, **caractérisée en ce que** le type de liaison par moyeu de disque est formé par des moitiés de moyeu de disque (12 - 15) qui correspondent.

3. Rangée de sièges selon la revendication 2, **caractérisée en ce qu'**il est prévu respectivement une moitié de moyeu de disque (12 ; 13) sur le séparateur de siège (4) et une moitié de moyeu de disque (14 ; 15) sur le pied d'appui (5 ; 6).

4. Rangée de sièges selon la revendication 3, **caractérisée en ce que** la largeur de la moitié de moyeu de disque (14 ; 15) du pied d'appui (5 ; 6) est un multiple de la largeur de la moitié de moyeu de disque (12 ; 13) du séparateur de siège (4).

5. Rangée de sièges selon la revendication 4, **caractérisée en ce que** la largeur de la moitié de moyeu de disque (14 ; 15) du pied d'appui (5 ; 6) est le multiple de la largeur de la moitié de moyeu de disque (12 ; 13) du séparateur de sièges (4).

6. Rangée de sièges selon l'une au moins des revendications 3 ou 5, **caractérisée en ce qu'**au moins une moitié de moyeu de disque (22 ; 23) supplémentaire peut être insérée entre la moitié de moyeu de disque (14 ; 15) du pied d'appui (5 ; 6) et/ou la moitié de moyeu de disque (12 ; 13) du séparateur de siège (4).

7. Rangée de sièges selon l'une au moins des revendications 3 - 6, **caractérisée en ce que** la différence de largeur entre la moitié de moyeu de disque (12 ; 13) du séparateur de siège (4) et la moitié de moyeu de disque (14 ; 15) du pied d'appui (5 ; 6) peut être compensée par des moitiés de moyeu de disque isolées et séparées (22 ; 23).

8. Rangée de sièges selon la revendication 7, **caractérisée en ce que** les moitiés de moyeu de disque isolées et séparées (22 ; 23 ; 24) ont la même largeur que les moyeux de disque (12 ; 13) fixés aux séparateurs de siège (4).

9. Rangée de sièges selon l'une au moins des revendications 3 à 8, **caractérisée en ce que** les moitiés de moyeu de disque (12 ; 15 et 13 ; 14 et 22 ; 23 ; 24) peuvent être reliées entre elles par des éléments de liaison (16 - 21) appropriés.

10. Rangée de sièges selon la revendication 9, **caractérisée en ce que** les moitiés de moyeu de disque séparées et isolées (22 ; 23 ; 24) peuvent être fixées individuellement respectivement aux moitiés de moyeu de disque (13 ; 14 ; 15) des pieds d'appui (5 ; 6) et au séparateur de siège (4) par des éléments de liaison appropriés.

11. Rangée de sièges selon l'une au moins des revendications 1 à 10, **caractérisée en ce que** les moitiés de moyeu de disque (12 ; 15 et 13 ; 14 et 22 ; 23 ; 24) sont reliées ensemble de telle sorte, qu'en cas d'écrasement, elles se déplacent ou cèdent au moins très légèrement par rapport au longeron (7 ; 8).

12. Rangée de sièges selon l'une au moins des revendications 1 à 11, **caractérisée en ce que** le séparateur de sièges (4), le pied d'appui (5 ; 6) et/ou les moitiés de moyeu de disque (12 ; 15 et 13 ; 14 et 22 ; 23 ; 24) sont constitués de mêmes composants.

13. Séparateur de siège pour sièges individuels (1 - 3), en particulier dans des avions, dont la largeur d'assise utile peut être réglée et qui sont maintenus sur des longerons (7 ; 8) s'étendant perpendiculairement à la direction d'assise, **caractérisé en ce que** le séparateur de siège (4) peut être fixé à au moins un longeron (7 ; 8) selon le principe d'une liaison par moyeu de disque, et **en ce que** le type de liaison par moyeu de disque est formé par des moitiés de moyeu de disque (12 ; 13) qui correspondent et une moitié de moyeu de disque est associée au séparateur de siège.

14. Pied d'appui pour des sièges individuels (1 - 3), en particulier dans des avions, dont la largeur d'assise utile peut être réglée et qui sont maintenus sur des longerons (7 ; 8) s'étendant perpendiculairement à la direction d'assise, **caractérisé en ce que** le pied d'appui (5 ; 6) peut être fixé à au moins un longeron (7 ; 8) selon le principe d'une liaison par moyeu de disque, et **en ce que** le type de liaison par moyeu de disque est formé par des moitiés de moyeu de disque (14 ; 15) qui correspondent et une moitié de moyeu de disque est associée au pied d'appui (5 ; 6).
